(19) Europäisches Patentamt

European Patent Office

Office européen des brevets

(11) Numéro de publication : **0 421 854 B1**

(12) **FASCICULE DE BREVET EUROPEEN**

(45) Date de publication du fascicule du brevet :
**26.01.94 Bulletin 94/04**

(21) Numéro de dépôt : **90402704.2**

(22) Date de dépôt : **01.10.90**

(51) Int. Cl.⁵ : **H01S 3/30,** H01S 3/101, H01S 3/25

(54) **Source laser de puissance à commande optique de balayage de faisceau.**

(30) Priorité : **03.10.89 FR 8912887**

(43) Date de publication de la demande :
**10.04.91 Bulletin 91/15**

(45) Mention de la délivrance du brevet :
**26.01.94 Bulletin 94/04**

(84) Etats contractants désignés :
**DE GB**

(56) Documents cités :
**EP-A- 0 067 082**
**EP-A- 0 408 406**
**WO-A-83/04145**
**FR-A- 2 438 358**

(73) Titulaire : **THOMSON-CSF**
**51, Esplanade du Général de Gaulle**
**F-92800 Puteaux (FR)**

(72) Inventeur : **Pocholle, Jean-Paul**
**THOMSON-CSF, SCPI, Cédex 67**
**F-92045 Paris la Défense (FR)**
Inventeur : **Papuchon, Michel**
**THOMSON-CSF, SCPI, Cédex 67**
**F-92045 Paris la Défense (FR)**
Inventeur : **Ayral, Jean-Luc**
**THOMSON-CSF, SCPI, Cédex 67**
**F-92045 Paris la Défense (FR)**
Inventeur : **Puech, Claude**
**THOMSON-CSF, SCPI, Cédex 67**
**F-92045 Paris la Défense (FR)**

(74) Mandataire : **Guérin, Michel et al**
**THOMSON-CSF SCPI B.P. 329 50, rue**
**Jean-Pierre Timbaud**
**F-92402 Courbevoie Cédex (FR)**

EP 0 421 854 B1

## Description

Le domaine de l'invention est celui des sources optiques cohérentes de puissance, à faisceau orientable.

Ces lasers sont généralement des lasers impulsionnels, dont le fonctionnement périodique permet de présenter, pendant de courts laps de temps, l'intense énergie souhaitée.

De telles sources sont particulièrement intéressantes pour pouvoir être insérées dans des systèmes de pointage avec une commande externe permettant de réaliser une fonction multi-poursuite à partir d'une source unique.

L'objectif de la présente invention est de réaliser un laser à balayage de faisceau de commande, dont le principe d'orientation de faisceau soit d'utilisation souple et aisément configurable.

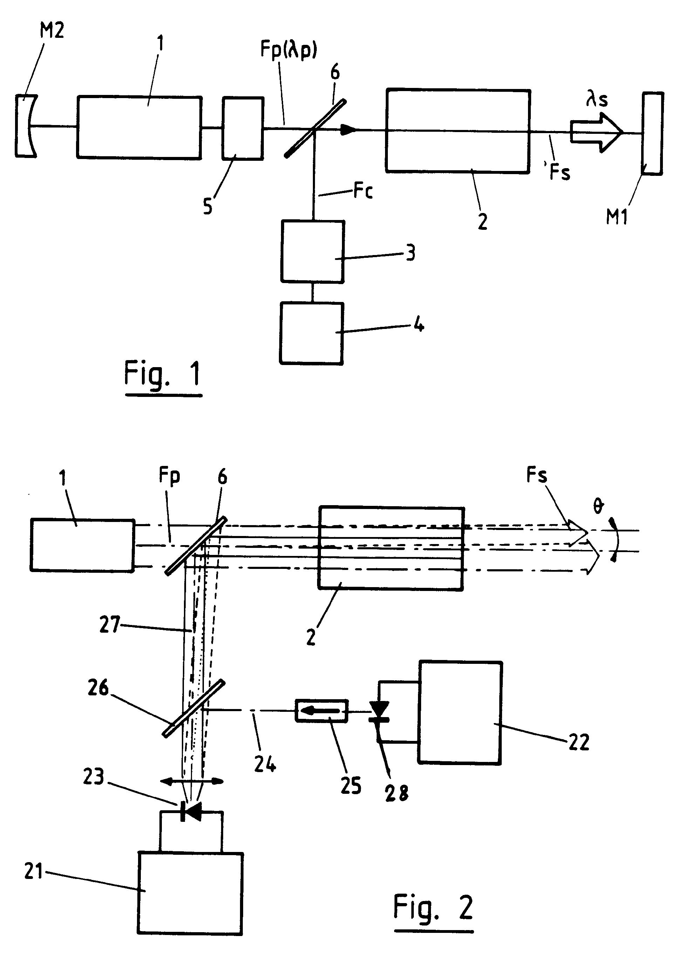

Dans le domaine des sources optiques cohérentes, la demande de brevet EP-A-0 408 406, aux noms des mêmes déposants, appartenant à l'état de la technique selon l'article 54(3)CEB, décrit un montage comportant un laser émettant un faisceau de pompe de longueur d'onde $\lambda p$ sur une cellule à gaz sous pression qui émet par effet RAMAN un faisceau de sortie à une longueur d'onde de Stokes ($\lambda s$). Une diode ou encore une source laser pompée par diode laser émet un faisceau de commande de même longueur d'onde ($\lambda s$) que le faisceau de sortie, et colinéaire avec le faisceau de pompe ce qui permet d'obtenir un signal de sortie de puissance élevée. Une source de ce type est présentée en fig.1 et détaillée plus loin.

L'originalité de ce montage consiste à utiliser une commande externe de la cellule RAMAN (diode, ou source laser pompée par diode) permettant de réaliser une source impulsionnelle plus stable en puissance crête, et plus reproductible d'un fonctionnement à l'autre.

Dans ce type de source, la surface effective de l'onde RAMAN a tendance à épouser le prolil de la surface de l'onde de pompe. L'objectif poursuivi est d'adapter les surfaces effectives des ondes pompe et RAMAN (surface et profil identiques) de façon que l'énergie transférée soit maximum. Dans une cavité de type semi-confocale il est possible de placer la cellule en un endroit approprié afin de réaliser cette condition.

Enfin, du fait de la commande exteme, il est ainsi possible de moduler la période ou encore la puissance d'émission du faisceau de sortie. Dans un mode de réalisation spécifique de ce montage, dans lequel la diode laser est remplacée par une source laser pompée par diode laser, il est également possible de faire varier la longueur d'onde d'émission.

L'objectif de la présente invention est d'utiliser ce type de montage à commande exteme pour, à l'aide d'un perfectionnement, obtenir une orientation variable du faisceau.

Selon l'invention, l'orientation variable du faisceau est obtenu au moyen d'une source laser de pompe émettant un faisceau de pompe d'une longueur d'onde déterminée;

- une cellule à gaz sous pression recevant le faisceau de pompe (Fp), et émettant par effet RAMAN un faisceau de sortie d'une longueur d'onde dite onde de Stokes;
- une source lumineuse de commande transmettant un faisceau de commande (Fc) à la cellule à gaz, ce faisceau de commande ayant une longueur d'onde sensiblement égale à l'onde de Stokes,

ladite source lumineuse comprenant des moyens de modification spatiale et/ou temporelle de l'injection des photons de commande du faisceau de commande (Fc) dans ladite cellule de façon à provoquer l'émission de faisceau de sortie dans une direction variable.

A la différence des montages présentés plus haut, on cherche donc à obtenir une distribution spatiale et angulaire spécifiques du faisceau de commande pour orienter sélectivement le faisceau de sortie, par exemple afin d'obtenir un balayage de faisceau ou une poursuite de cible.

Selon un mode de réalisation préférentiel, lesdits moyens de modification spatiale et/ou temporelle du faisceau de commande sont constitués par une structure ruban multilasers formant laser esclave de puissance, coopérant avec des moyens de modification du diagramme de rayonnement de ladite structure ruban multilasers.

Avantageusement, lesdits moyens de modification du diagramme de rayonnement de la structure ruban multilasers sont constitués par des moyens de commande de la dérive spectrale d'un laser maître, les variations de fréquence du faisceau émis par ledit laser maître assurant, par couplage, la sélection de modes de rayonnements distincts de ladite structure ruban multilasers.

Dans ce cas, selon un mode de réalisation préférentiel, lesdits moyens de commande de la dérive spatiale du laser maître sont constitués par des moyens de contrôle du courant injecté dans ledit laser maître.

Lesdits moyens de modification du diagramme de rayonnement de ladite structure ruban multilasers comprennent par exemple des moyens de modifications de la température de ladite structure multilasers et/ou dudit laser maître.

Dans un autre mode de réalisation, lesdits moyens de modification spatiale et/ ou temporelle de l'injection des photons de commande sont constitués par un modulateur acousto-optique.

D'autres caractéristiques et avantages de l'invention apparaîtront à la lecture de la description suivante d'un mode préférentiel de l'invention, donné à titre illustratif et non limitatif, et des dessins annexés dans lesquels :

- la figure 1 représente le principe de fonctionnement de la source laser à cellule RAMAN, pilotée par un faisceau de commande présentant une longueur d'onde sensiblement égale à celle du faisceau de sortie de la cellule, comme décrit dans la demande de brevet conjointe pré-citée.
- la figure 2 est un schéma d'un mode de réalisation préférentiel de l'invention, illustrant le principe d'utiliser un module laser maître / laser esclave fournissant une commande optique de balayage angulaire du faisceau de sortie de la cellule RAMAN dans le montage de la figure 1.

Le mode réalisation décrit ci-après se rapporte à la réalisation de sources lasers de puissance travaillant dans les fenêtres spectrales 1,06μm et/ou 1,54μm, 1, 396 μm, 2,355 μm.

Le choix de la longueur d'onde d'émission dans le domaine spectral situé vers 1,5 μm est lié au fait que les risques de dommages optiques oculaires sont minimisés et, qu'à cette longueur d'onde, l'atmosphère présente une bonne fenêtre de transmission. Rappelons que l'exposition maximale admissible au niveau de l'oeil humain est de 5 μJ/cm2 à 1,064 μm et passe à 1 J/cm2 à 1,54 μm. Il s'ensuit que la réalisation de sources lasers de puissance dans ce domaine spectral présente des avantages indéniables.

Le montage de la figure 1 correspond à un montage compatible avec la mise en oeuvre du principe de commande optique de balayage de faisceau suivant l'invention. Ce dispsitif comprend :

- un barreau laser à cavité externe 1 émettant un faisceau de pompe Fp à une longueur d'onde p déterminée ;
- un déclencheur 5, appelé "Q.Switch" en terminologie anglo saxonne permettant de faire travailler le laser 1 en régime déclenché ;
- une cellule à gaz sous pression 2 recevant le faisceau de pompe Fp et dont le gaz est excité par ce faisceau de telle façon qu'il émette par effet RAMAN, un faisceau Fs avec un décalage en fréquence et qu'il y ait un transfert d'énergie du faisceau de pompe Fp vers le faisceau Fs ;
- une source lumineuse de commande constituée d'une source laser de commande 3 pompée par une diode laser 4 et émettant, vers la cellule à gaz 2, un faisceau de commande Fc à une longueur d'onde sensiblement égale à celle du faisceau Fs ;
- deux miroirs M1 et M2, situés de part et d'autre du laser 1 et de la cellule 2, constituant une cavité optique ;

On peut utiliser pour le laser de pompe 1, une source de puissance à base de fluorure d'Yttrium (LiYF$_4$) dopé à l'Holmium (Ho$^{3+}$), connu sous la désignation Ho : YLF. La longueur d'onde d'émission d'une telle source est 1,396 micromètre. La cellule à gaz 2 est à base de méthane (CH$_4$) sous haute pression. Un faisceau de pompe Fp émis par le laser de pompe 1 provoque par effet RAMAN, l'émission d'une onde Stokes de longueur d'onde 2,355 micromètres. Pour la source de commande 3, on choisit alors une source à base de Thallium dopant une matrice YAlO$_3$, dont la désignation peut être Tm: Cr$^{3+}$, (Cr$^{3+}$ est un Co dopant). Cette source laser peut être dopée longitudinalement à partir d'une diode laser 4 émettant entre 0,71 et 0,8 micromètre. Le faisceau de commande Fc a alors une longueur d'onde d'environ 2,355 micromètres. On réalise donc une commande de l'effet dans la cellule à gaz 2.

L'onde obtenue par l'effet RAMAN présente l'avantage d'être située dans un domaine spectral où la fenêtre de transmission de l'atmosphère est transparente. Une telle association permet donc de réaliser une source de puissance à 2,355 micromètres.

Une autre réalisation consiste à employer un laser Nd : YAG émettant à 1,3187 micromètre et une cellule RAMAN à base d'hydrogène sous pression fournissant une onde de Stokes à la longueur d'onde λs de 2,916991 micromètres.

La source laser 3 est alors une source à base d'Holmium dopant un matériau YAlO$_3$ (désigné par Ho : YAlO$_3$). Cette source 3 excitée par une diode laser émet à une longueur d'onde p d'environ 2,918 micromètres.

L'ajustement des deux longueurs d'onde (λp et λs) s'effectue par l'intermédiaire d'un contrôle de la composition du gaz de la cellule RAMAN (pression, température, mélange...) et en jouant sur les paramètres de la cavité laser du cristal Ho: YAlO$_3$.

Dans un autre mode de réalisation, non représenté, le miroir M1 peut être situé juste derrière le déclencheur 5 du montage de la figure 1. Dans ce cas, la cavité optique contient le laser 1, mais ne contient pas la cellule à gaz 2. Celle-ci se trouve sur le chemin du faisceau de pompe Fp mais à l'extérieur de la cavité optique et l'amplification RAMAN dans la cellule à gaz 2 est donc réalisée à partir de l'extérieur de la cellule active.

Cette disposition permet de rendre le faisceau de commande Fc strictement colinéaire avec le faisceau de pompe Fp sans avoir à craindre un retour optique sur la source de commande 3, ce qui pourrait être le cas dans le dispositif de la figure 1 si les faisceaux de commande Fc et de pompe Fp étaient strictement colinéaires.

La superposition du faisceau de commande Fc et du faisceau de pompe Fp peut se faire à l'aide d'une lame séparatrice 6 disposée sur les trajets des faisceaux de pompe Fp et de commande Fc et convenablement orientée par rapport à ces faisceaux.

La source de commande 3 a pour objet d'injecter l'onde optique dans la cellule 2 où se développe le processus non linéaire RAMAN.

Selon l'invention, il est possible de commander ce processus spatialement et temporellement.

En effet, si le faisceau de commande a une plus petite dimension de faisceau que celui correspondant à la distribution spatiale du gain RAMAN, le mécanisme de transfert de l'onde de pompe vers l'onde Stokes sera privilégié sur l'espace dans lequel se trouvent injectés les photons d'initialisation du processus RAMAN.

Le mécanisme RAMAN peut être décrit à partir de l'équation :

$$P_s(x,y) = P_s^0(x,y) \exp ( - a_s(x,y)z + g_R P_p^0(x,y) L_{eff} / A_{eff}(x,y) )$$

$P_s^0(x,y)$ et $P_p^0(x,y)$ représentent respectivement les puissances signal (à la fréquence de l'onde Stokes dans le processus RAMAN) et de pompe injectées dans le milieu gazeux, siège de l'effet RAMAN. Les autres paramètres représentent :

- $g_R$ : le gain RAMAN du milieu
- $a_s(x,y)$ : les pertes à la fréquence Stokes
- $A_{eff}(x,y)$ : la surface effective couverte par les deux sections de faisceau aux fréquences Stokes et pompe.
- $L_{eff}$ : la longueur effective d'interaction prenant en compte les pertes sur l'onde de pompe.
- l'exposant 0 : ce qui rentre dans la cellule $Z_0$ (direction de propagation)

Un des moyens permettant de modifier spatialement l'injection des photons de commande consiste à utiliser un modulateur acousto-optique.

Une autre possibilité est fondée sur l'emploi des mécanismes de mise en phase et de contrôle de celle-ci sur des structures de lasers semiconducteurs de type "phase arrays". Ce mode de réalisation est illustré en fig 2.

L'architecture de la source, de façon similaire avec le montage de la figure 1, comprend un laser de puissance 1, de type Nd : YAG, venant pomper une cellule RAMAN 2 remplie d'un gaz sous pression sélectionné en fonction du décalage en fréquence RAMAN désiré.

Un laser d'injection 21 commande le déclenchement du processus RAMAN. Dans le cas où le gaz employé dans la cellule RAMAN est du méthane ou de l'hydrogène, le laser de commande 21 peut-être réalisé à partir des composés semi-conducteurs InGaAs/InP.

Ce laser 21 est un laser "esclave" constitué d'une structure ruban multilasers, présentant une pluralité de diodes émettrices 23 de moyenne puissance. Ces structures ruban multilasers offrent un sprectre de fréquence d'émission présentant plusieurs raies d'émission.

La structure ruban coopère avec un laser oscillateur "maître" 22, qui illumine le réseau de diodes 23 à l'aide d'un faisceau 24 traversant un isolateur 25 et une lame séparatrice 26.

Le fonctionnement de la structure laser "maître" 22/ laser "esclave" 21 est la suivante.

Le laser maître 22 est un laser monofréquence injectant un signal de fréquence donnée. La fréquence d'émission de son faisceau 24 est par exemple commandée par le courant d'injection du laser.

Le principe de commande consiste à piloter la dérive de la longueur d'onde d'émission du laser maître 22, de façon à permettre au faisceau 24 de se verrouiller sur un des modes d'émission de la structure ruban du laser esclave 21. En d'autres termes, on réalise la commande sélective de l'un des modes d'émission du ruban de diodes 23 en injectant à l'aide du faisceau 24 émis par le laser maître 22 la fréquence correspondant à ce mode propre de rayonnement du ruban de diodes.

C'est la sélection de ce mode de rayonnement du laser esclave 21 qui permet de maîtriser le décalage angulaire $\Theta$ du faisceau de sortie Fs de la cellule RAMAN 2.

En effet, le ruban de diodes 23 couplées en parallèle, formant le laser esclave 21, est fortement multimodes. Il présente beaucoup de possibilités de configuration de l'intensité optique, qui sont chacune sélectivement activables. A chaque mode d'émission correspond une fréquence, et une configuration de champ propre, c'est à dire une distribution d'intensité d'émission spécifique pour chaque fréquence du spectre.

En controlant le laser maître 22, et plus précisément la fréquence du faisceau 24, on commande le mode de fonctionnement du laser esclave 21 en modifiant le champ proche du ruban de sources laser 23. De cette façon, on modifie le diagramme de rayonnement du laser esclave 21, et donc de la source de commande de la cellule RAMAN 2.

Chaque configuration du diagramme du rayonnement correspond à une distribution spatiale du faisceau 27. Du fait de l'alignement des diodes d'émission 23 dans le ruban, la sélection d'un mode d'émission correspond donc à une variation angulaire du faisceau de commande 27. On injecte ainsi, via la lame séparatrice 6, un faisceau de commande de direction privilégiée dans le milieu non linéaire de la cellule RAMAN 2. Ce faisceau de commande vient donc commander préférentiellement le déclenchement du transfert de puissance de l'onde de pompe Fp issu du laser de pompe 1 vers l'onde Stokes du faisceau de sortie Fs de la cellule 2.

Le contrôle de la fréquence du faisceau 24 émise par le laser maître 22 s'effectue par exemple par un contrôle du courant injecté dans le laser maître. Un autre mode de réalisation consiste à modifier la température soit de la diode émissive 28 du laser maître 22, soit des diodes émettrices 23 du laser esclave 21.

## Revendications

1. Source laser de puissance à balayage de faisceau, du type comportant:
   - une source laser de pompe (1) émettant un faisceau de pompe (Fp) d'une longueur d'onde ($\lambda$p) déterminée;
   - une cellule à gaz sous pression (2) recevant le faisceau de pompe (Fp), et émettant par effet Raman un faisceau de sortie (Fs) d'une longueur d'onde ($\lambda$s) dite onde de Stokes;
   - une source lumineuse de commande (3,4) transmettant un faisceau de commande (Fc) à la cellule à gaz, ce faisceau de commande (Fc) ayant une longueur d'onde sensiblement égale à l'onde de Stokes ($\lambda$s), ladite source lumineuse (3,4) comprenant des moyens (21,22) de modification spatiale et/ou temporelle de l'injection des photons de commande du faisceau de commande (Fc) dans ladite cellule (2), de façon à provoquer l'émission dudit faisceau de sortie (Fs) dans une direction variable ($\Theta$).

2. Source laser selon la revendication 1 caractérisée en ce que lesdits moyens de modification spatiale et/ou temporelle du faisceau de commande sont constitués par une structure ruban multilasers (21, 23) formant laser esclave de puissance, coopérant avec des moyens (22) de modification du diagramme de rayonnement de ladite structure ruban multilasers.

3. Source selon la revendication 2 caractérisée en ce que lesdits moyens (22) de modification du diagramme de rayonnement de la structure ruban multilasers (21,23) sont constitués par des moyens de commande de la dérive spectrale d'un laser maître, les variations de fréquence du faisceau (24) émis par ledit laser maître assurant, par couplage, la sélection de modes de rayonnements distincts de ladite structure ruban multilasers (21, 23).

4. Source laser selon la revendication 3 caractérisée en ce que lesdits moyens de commande de la dérive spatiale du faisceau (24) du laser maître (22) sont constitués par des moyens de contrôle du courant injecté dans ledit laser maître (22).

5. Source selon l'une quelconque des revendications 3 et 4 caractérisée en ce que lesdits moyens de modification du diagramme de rayonnement de ladite structure ruban multilasers (21, 23) comprennent des moyens de modification de la température de ladite structure multilasers (21, 23) et/ou dudit laser maître (22).

6. Source selon la revendication 1 caractérisée en ce que lesdits moyens de modification spatiale et / ou temporelle de l'injection des photons de commande sont constitués par un modulateur acousto-optique.

## Patentansprüche

1. Leistungslaserquelle, deren Strahl abgelenkt werden kann,
   - mit einer Pumplaserquelle (1), die einen Pumpstrahl (Fp) einer bestimmten Wellenlänge ($\lambda$p) aussendet,
   - mit einer Druckgaszelle (2), die den Pumpstrahl (Fp) zugeführt erhält und aufgrund des RAMAN-Effekts einen Ausgangsstrahl (Fs) einer Wellenlänge ($\lambda$s) aussendet, die Stokeswellenlänge genannt wird,
   - mit einer Steuerlichtquelle (3, 4), die einen Steuerstrahl (Fc) zur Gaszelle überträgt, wobei dieser Steuerstrahl (Fc) eine Wellenlänge im wesentlichen gleich der Stokeswellenlänge ($\lambda$s) besitzt,
   wobei die Steuerlichtquelle (3, 4) Mittel (21, 22) zur räumlichen und/oder zeitlichen Veränderung der Injektion der Steuerphotonen des Steuerstrahls (Fc) in die Zelle (2) aufweist, so daß die Aussendung des Ausgangsstrahls (Fs) in eine variable Richtung ($\Theta$) hervorgerufen wird.

2. Laserquelle nach Anspruch 1, dadurch gekennzeichnet, daß die Mittel zur räumlichen und/oder zeitlichen Veränderung des Steuerstrahls aus einer bandförmigen Mehrfachlaserstruktur (21, 23) bestehen, die einen Sklaven-Leistungslaser bildet und mit Mitteln (22) zur Veränderung des Strahlungsdiagramms der bandartigen Mehrfachlaserstruktur zusammenwirkt.

3. Quelle nach Anspruch 2, dadurch gekennzeichnet, daß die Mittel (22) zur Veränderung des Strahlungsdiagramms der bandartigen Mehrfachlaserstruktur (21, 23) aus Mitteln zur Steuerung der spektralen Verschiebung eines Meisterlasers bestehen, wobei die Veränderungen der Frequenz des von diesem Meisterlaser ausgesandten Strahls (24) durch Kopplung die Auswahl von bestimmten Strahlungsmodi der bandartigen Mehrfachlaserstruktur (21, 23) gewährleisten.

4. Laserquelle nach Anspruch 3, dadurch gekennzeichnet, daß die Steuermittel für die Spektralverschiebung des Strahls (24) des Meisterlasers (22) aus Mitteln bestehen, die den in den Meisterlaser (22) injizierten Strom steuern.

5. Quelle nach einem beliebigen der Ansprüche 3 und 4, dadurch gekennzeichnet, daß die Mittel zur Veränderung des Strahlungsdiagramms der bandartigen Mehrfachlaserstruktur (21, 23) Mittel zur Veränderung der Temperatur der Mehrfachlaserstruktur (21, 23) und/oder des Meisterlasers (22) enthalten.

6. Quelle nach Anspruch 1, dadurch gekennzeichnet, daß die Mittel zur räumlichen und/oder zeitlichen Veränderung der Injektion der Steuerphotonen aus einem akusto-optischen Modulator bestehen.

## Claims

1. Power laser source with beam scan, of the type including:
   - a pump laser source (1) emitting a pump beam (Fp) of a specified wavelength ($\lambda$p);
   - a pressurized gas cell (2) receiving the pump beam (Fp), and emitting by Raman effect an output beam (Fs) of wavelength ($\lambda$s) termed the Stokes wavelength;
   - a control light source (3, 4) transmitting a control beam (Fc) to the gas cell, this control beam (Fc) having a wavelength substantially equal to the Stokes wavelength ($\lambda$s),

   the said light source (3, 4) comprising means (21, 22) for spatial and/or temporal modification of the injection of photons for control of the control beam (Fc) into the said cell (2), so as to prompt the emission of the said output beam (Fs) in a variable direction ($\theta$).

2. Laser source according to Claim 1, characterized in that the said means for spatial and/or temporal modification of the control beam consist of a multilaser stripe structure (21, 23) forming a slave power laser cooperating with means (22) for modifying the radiation pattern of the said multilaser stripe structure.

3. Source according to Claim 2, characterized in that the said means (22) for modifying the radiation pattern of the multilaser stripe structure (21, 23) consist of means for control of the spectral drift of a master laser, the frequency variations of the beam (24) emitted by the said master laser affording, through coupling, selection of distinct radiation modes of the said multilaser stripe structure (21, 23).

4. Laser source according to Claim 3, characterized in that the said means for control of the spatial drift of the beam (24) of the master laser (22) consist of means for governing the current injected into the said master laser (22).

5. Source according to either one of Claims 3 or 4, characterized in that the said means for modifying the radiation pattern of the said multilaser stripe structure (21, 23) comprise means for modifying the temperature of the said multilaser structure (21, 23) and/or of the said master laser (22).

6. Source according to Claim 1, characterized in that the said means for spatial and/or temporal modification of the injection of photons for control consist of an acousto-optical modulator.

Fig. 1

Fig. 2